(19) Europäisches Patentamt

European Patent Office

Office européen des brevets

(11) Veröffentlichungsnummer: **0 372 247 B1**

(12) **EUROPÄISCHE PATENTSCHRIFT**

(45) Veröffentlichungstag der Patentschrift: **10.11.93**

(21) Anmeldenummer: **89120741.7**

(22) Anmeldetag: **09.11.89**

(51) Int. Cl.⁵: **B25B 23/142**, G01L 1/22

(54) **Drehmomentschlüssel und Vorrichtung zu seinem Einstellen und/oder Eichen.**

(30) Priorität: **02.12.88 DE 3840684**

(43) Veröffentlichungstag der Anmeldung:
**13.06.90 Patentblatt 90/24**

(45) Bekanntmachung des Hinweises auf die
Patenterteilung:
**10.11.93 Patentblatt 93/45**

(84) Benannte Vertragsstaaten:
**DE FR GB IT**

(56) Entgegenhaltungen:
EP-A- 0 100 023       EP-A- 0 133 557
EP-A- 0 210 892       DE-A- 3 429 950
DE-A- 3 520 941       DE-A- 3 607 363
US-A- 2 955 454       US-A- 4 517 821

TECHNICA. no. 9, September 1982, ZURICH
CH Seite 867 "Drehmoment-Prüfgerät für
elektrische und pneumatische Schraubendreher"

(73) Patentinhaber: **CDI CONSOLIDATED DEVICES
INC.**
**19220 San Jose Avenue**
**City of Industry, CA 91748(US)**

(72) Erfinder: **Pohl, Peter**
**Humboldtstrasse 16**
**D-4010 Hilden(DE)**

(74) Vertreter: **Mentzel, Norbert, Dipl.-Phys.**
**Patentanwälte Dipl.-Phys. Buse**
**Dipl.-Phys. Mentzel**
**Dipl.-Ing. Ludewig,**
**Postfach 20 14 62**
**D-42214 Wuppertal (DE)**

EP 0 372 247 B1

## Beschreibung

Die Erfindung betrifft einen Drehmomentschlüssel zum Aufbringen und/oder Messen einer vorbestimmten Vorspannung auf die Schäfte von in Werkstücken eingezogenen Schrauben, insbesondere Dehnschrauben, und Vorrichtung zum Einstellen und/oder Eichen des Drehmomentschlüssels, der aus einem Hebelarm besteht, an dessen einem Hebelende eine Angriffsstelle für den Schraubenkopf bzw. für die Schraubenmutter angeordnet und dessen anderes Hebelende als Handhabe ausgebildet ist und einen elektrische Daten gebenden Drehmomentmesser, wie zum Beispiel mindestens einen Dehnungsmeßstreifen aufweist, der an einem beim bestimmungsgemäßen Gebrauch sich elastisch biegenden Bereich des Hebelarms in Längsrichtung angeordnet und in einer Wheatstone-Meßbrücke geschaltet ist und die Querspannung der Meßbrücke verstärkt einem Meßwertspeicher und über einem Analog-Digital-Wandler einem Mikroprozessor zuführbar ist und der Mikroprozessor ein digital anzeigendes Anzeigegerät steuert.

Bei diesem aus der EP-A-0 100 023 bekannten Drehmomentschlüssel ist zum Eichen der Drehmomentschlüssel an einem Eichgerät anzusetzen und mit dem Drehmomentschlüssel ein Drehmoment auf das Eichgerät auszuüben, wobei dann die Anzeigegeräte der Eichvorrichtung und des Drehmomentschlüssels das mit dem Drehmoment schlüssel aufgebrachte Drehmoment anzeigen. Die elektrisch betriebene Meßeinrichtung des Drehmomentschlüssels ist dann erforderlichenfalls einzustellen, bis das Anzeigegerät des Drehmomentschlüssels den gleichen Wert anzeigt, wie das Anzeigegerät der Eichvorrichtung. Das Korregieren muß mit einem Potentiometer am Verstärker vorgenommen werden. Dieses ist jedoch sehr umständlich und nur von erfahrenen Fachleuten durchführbar, insbesondere wenn die Eichung über einen größeren Meßbereich erfolgen soll und wenn an dem Drehmomentschlüssel zwei Meßbrückenschaltungen vorgesehen sind, die je für sich mit Potentiometer einzustellende Verstärker aufweisen. Bei einer Umstellung der Maßeinheiten sind ebenfalls umfangreiche Einstellarbeiten erforderlich.

Der Erfindung liegt die Aufgabe zugrunde, einen Drehmomentschlüssel und eine Vorrichtung zu seinem Einstellen und/oder Eichen der eingangs erläuterten Art zu schaffen, um den Drehmomentschlüssel in einfacher Weise einzustellen und/oder zu Eichen, wobei diese Arbeiten von jedem Benutzer des Drehmomentschlüssels durchgeführt werden können.

Diese Aufgabe ist erfindungsgemäß dadurch gelöst, daß die zum Einstellen und/oder Eichen des Drehmomentschlüssels dienende Vorrichtung einen mit dem Drehmomentschlüssel kuppelbaren Bauteil aufweist, der mit dem Drehmoment des Drehmomentschlüssels belastbar ist und sich dabei entsprechend dem vom Drehmomentschlüssel aufgebrachten Drehmoment elastisch verformt und einen elektrische Daten gebenden Drehmomentmesser, wie zum Beispiel mindestens einen in einer Wheatstone-Meßbrücke geschalteten Dehnungsmeßstreifen aufweist und die Querspannung der Meßbrücke verstärkt über einen Analog-Digital-Wandler einem Mikroprozessor und einem Anzeigegerät zuführbar ist, wobei die beiden elektrische Daten gebenden Meßeinrichtungen vom Drehmomentschlüssel und von der Einstell- und/oder Eichvorrichtung derart miteinander verbunden sind, daß die Meßeinrichtung der Einstell- und/oder Eichvorrichtung die Meßeinrichtung des Drehmomentschlüssels kontrolliert und erforderlichenfalls mit Faktoren zur Umstellung, Einstellung, Korrektur od. dgl. versieht. Dadurch wird in einfacher Weise erreicht, daß die Einstell- und/oder Meßeinrichtung nach ihrer werksmäßigen Einstellung mit ihrer elektrisch betriebenen Meßeinrichtung bei ihrem bestimmungsgemäßen Gebrauch mit der elektrisch betriebenen Meßeinrichtung des Drehmomentschlüssels verbunden wird, so daß die beiden elektrischen Daten gebenden Meßeinrichtungen einen Dialog miteinander führen können und die elektrische Daten gebende Meßeinrichtung der Einstellund/oder Eichvorrichtung die elektrische Daten gebende Meßeinrichtung des Drehmomentschlüssels kontrolliert und erforderlichenfalls mit Umstellungsfaktoren, Einstellungsfaktoren, Korrekturfaktoren od. dgl. versieht, so daß das Anzeigegerät der Meßeinrichtung vom Drehmomentschlüssel anschließend den gleichen Wert anzeigt , wie das Anzeigegerät der Einstell- und/oder Eichvorrichtung. Die den Einstellvorgang bzw. Eichvorgang vornehmende Person braucht dabei keinerlei Vorkenntnisse oder Erfahrungen besitzen, da das Einstellen und/oder Eichen selbsttätig von der Einstell- und/oder Eichvorrichtung vorgenommen wird und die Bedienungsperson lediglich den Drehmomentschlüssel mit der Einstell- und/oder Eichvorrichtung verbinden und mit dem Drehmomentschlüssel ein Drehmoment auf die Vorrichtung ausüben muß.

Der mit dem Drehmomentschlüssel kuppelbare Bauteil der zum Einstellen und/oder Eichen des Drehmomentschlüssels dienenden Vorrichtung kann von einem Torsionsstab gebildet sein, der den von einem Dehnungsmeßstreifen gebildeten, elektrische Daten gebenden Drehmomentmesser aufweist und sich entsprechend dem vom Drehmomentschlüssel aufgebrachten Drehmoment elastisch verdreht. Die zum Einstellen und/oder Eichen des Drehmomentschlüssels dienende Vorrichtung weist somit in einfacher Weise einen Torsionsstab auf, der das mit dem Drehmomentschlüssel aufgebrachte Drehmoment durch Verdrehung elastisch aufnimmt. Mit dem am Torsionsstab angebrachten, von einem Dehnungsmeßstreifen gebildeten, elektrische Daten gebenden Drehmomentmesser ist dabei in einfacher Weise die Größe des Drehmomentes meßbar und anzeigbar.

Die elektrisch betriebene Meßeinrichtung des Drehmomentschlüssels kann mit einer am Schlüssel vorgesehenen Steckkontakteinrichtung (Schnittstelle, Interface) mit der ebenfalls elektrisch betriebenen Meßeinrichtung der Einstell- und/oder Eichvorrichtung zu dessen bestimmungsgemäßen Anwendung verbindbar sein. Über dem am Drehmomentschlüssel vorgesehenen Steckkontakt ist somit in einfacher Weise die elektrisch betriebene Meßeinrichtung der Einstell- und/oder Eichvorrichtung mit der elektrisch betriebenen Meßeinrichtung des Drehmomentschlüssels verbindbar, so daß beim bestimmungsgemäßen Gebrauch der Einstell-und/oder Eichvorrichtung die elektrische Daten gebende Meßeinrichtung der Einstell- und/oder Eichvorrichtung auf die ebenfalls elektrische Daten gebende Meßeinrichtung des Drehmomentschlüssels einwirken kann.

Beim Einstell- und/oder Eichvorgang können erforderlichenfalls analoge Korrekturfaktoren von der Einstell- und/oder Eichvorrichtung in den Analog-Digital-Wandler der Meßeinrichtung des Drehmomentschlüssels eingebbar sein. Dadurch kann in einfacher Weise zur Einstellung und Eichung des Drehmomentschlüssels die Einstell- und/oder Eichvorrichtung die entsprechenden Einstellungsfaktoren, Umstellungsfaktoren, Korrekturfaktoren od. dgl. in die Meßeinrichtung des Drehmomentschlüssels eingeben.

Natürlich ist es auch möglich, beim Einstell- und/oder Eichvorgang erforderlichenfalls digitale Korrekurfaktoren von der Einstell- und/oder Eichvorrichtung in die Meßeinrichtung des Drehmomentschlüssels einzugeben. Diese digitale Korrekturfaktoren können dabei in einfacher Weise dem Mikroprozessor zugeführt werden, so daß eine Einstellung, Umstellung oder Korrektur möglich ist.

Bei der gegebenenfalls erfolgenden Ermittlung unterschiedlich großer Korrekturfaktoren bei der Einstellung und/oder Eichung unterschiedlich großer Drehmomente können die Korrekturfaktoren in Form einer Tabelle in einem Speicher, wie zum Beispiel einen gepufferten RAM-Speicher, einem EEprom od. dgl. ablegbar und beim Meßvorgang im Programm des Drehmomentschlüssels abrufbar sein. In einfacher Weise ist dadurch jede Größe des mit dem Drehmomentschlüssel erzielbaren Drehmomentes genau eingestellt und geeicht.

Die in Form einer Tabelle in einem Speicher der Meßeinrichtung des Drehmomentschlüssels ablegbaren Korrekturfaktoren können zusätzlich in einem weiteren, vom Drehmomentschlüssel abnehmbaren und bedarfsweise mit der Meßeinrichtung des Drehmomentschlüssels wieder verbindbaren Speicher ablegbar sein. Bei einem Ausfall der Batterie, mit der die elektrische Meßeinrichtung des Drehmomentschlüssels betrieben wird, können Eichwerte verloren gehen. Nach dem Einsetzen einer neuen Batterie in den Drehmomentschlüssel können die Eichwerte mit dem abnehmbaren Zusatzspeicher wieder in die elektrisch betriebene Meßeinrichtung des Drehmomentschlüssels eingegeben werden, so daß eine Neueichung vermieden wird.

Bei einer Anordnung von zwei oder mehr Dehnungsmeßstreifen am sich elastisch biegenden Bereich des Hebelarms vom Drehmomentschlüssel kann jeder Dehnungsmeßstreifen, voneinander unabhängig, je für sich in einer Wheatstone-Meßbrükke geschaltet und die Querspannungen der Meßbrücken je für sich verstärkt und über einem Schalter je einem Meßwertspeicher und von dort taktweise, abwechselnd über einen Analog-Digital-Wandler dem Mikroprozessor mit Anzeigegerät zuführbar sein, und die von den Wheatstone-Brückenschaltungen ermittelten Werte beim Einstell- und/oder Eichvorgang je für sich von der Einstell- und/oder Eichvorrichtung kontrolliert und je für sich erforderlichenfalls mit den entsprechenden Korrekturfaktoren versehen werden. Dadurch wird in einfacher Weise eine besonders genaue Einstellung und Korrektur errreicht.

Beim Beginn der Einstellung und/oder Eichung kann auch der Nullpunkt der Meßbrücken des Drehmomentschlüssels mit von der elektrisch betriebenen Meßeinrichtung der Einstell-und/oder Eichvorrichtung kommenden Korrekturfaktoren einstellbar sein. Die Meßbrücken des Drehmomentschlüssels, die außer dem jeweils zugehörigen Dehnungsmeßstreifen jeweils drei weitere Widerstände aufweisen, erfordern somit nicht mehr einen Feinabgleich mit Potentiometer oder mindestens einen trimmbaren Widerstand.

Auf der Zeichnung ist die Erfindung in einem Ausführungsbeispiel dargestellt, und zwar zeigen:

Fig. 1  einen erfindungsgemäßen Drehmomentschlüssel in schaubildlicher Darstellung,

Fig. 2  den Biegestab des Drehmomentschlüssels in schematischer Darstellung mit einem Diagramm des Drehmomentes,

Fig. 3  den Schaltplan des Drehmomentschlüssels,

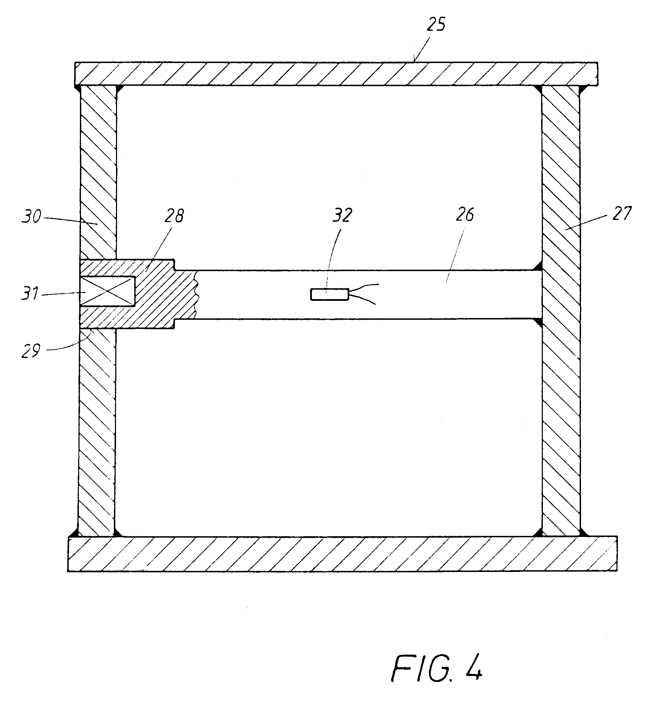

Fig. 4  die erfindungsgemäße Vorrichtung zum Einstellen und/oder Eichen des Drehmomentschlüssels in einer schematischen Schnittdarstellung und

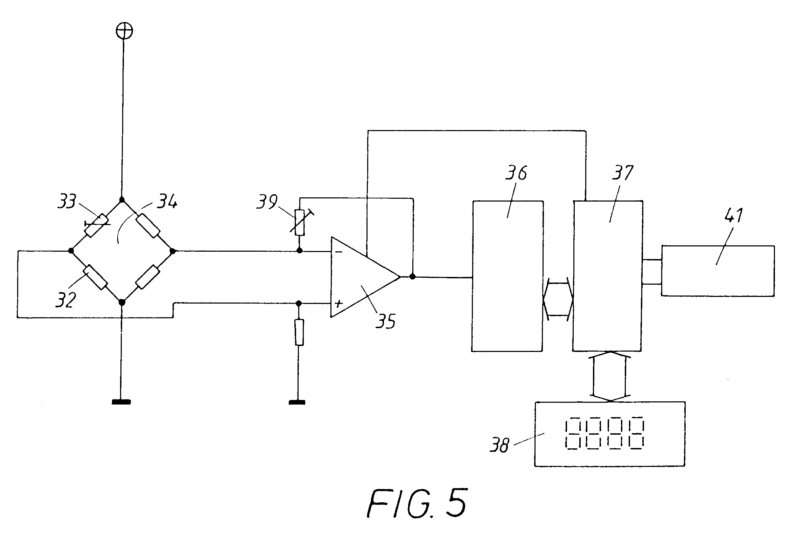

Fig. 5  den Schaltplan der Einstell- und/oder Eichvorrichtung.

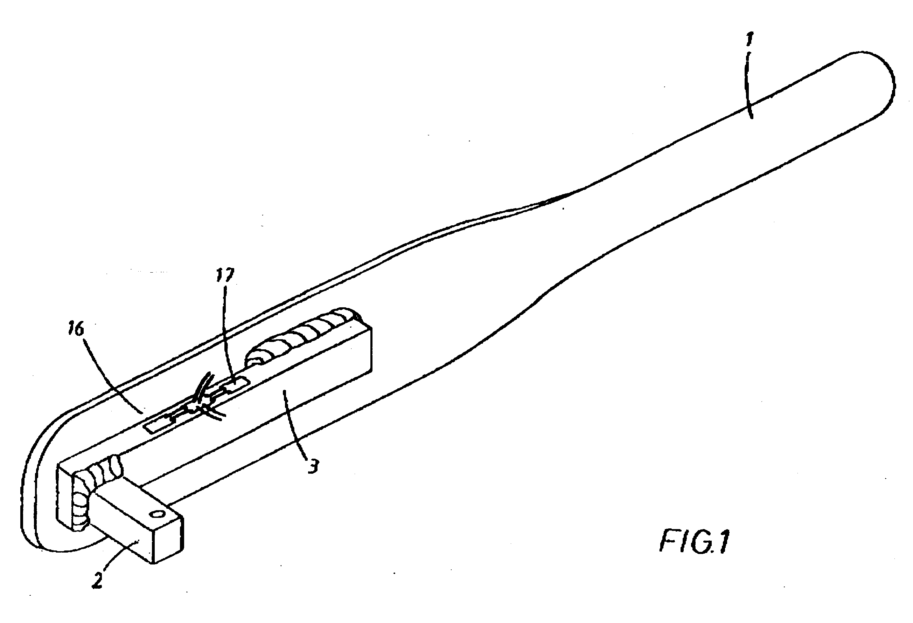

Der in der Fig. 1 dargestellte Drehmomentschlüssel dient zum Aufbringen und/oder Messen einer vorbestimmten Vorspannung auf die Schäfte von in Werkstücke eingezogenen Schrauben, insbesondere Dehnschrauben. Die Werkstücke und die Schrauben sind dabei der Einfachheit halber nicht näher dargestellt. Der Drehmomentschlüssel besteht aus einem Hebelarm, der als Biegestab 3 dient. An dem einen Ende des Biegestabes 3 ist eine Angriffsstelle in Form eines Vierkantzapfens 2 für den Schraubenkopf bzw. die Schraubenmutter angeordnet. Auf dem Vierkantzapfen 2 ist dabei in bekannter Weise eine nicht näher dargestellte Nuß aufzustecken, die eine Ausnehmung für ein formschlüssiges Aufsetzen auf den Schraubenkopf bzw. auf die Schraubenmutter aufweist. An dem anderen Ende des Biegestabes 3 ist der Handgriff 1 vorgesehen. Beim dargestellten Ausführungsbeispiel besteht der Handgriff 1 aus einem Flacheisen, welches am Biegestab 3 durch Schweißen befestigt ist. Der Handgriff kann natürlich auch von einer angeformten Verlängerung des Biegestabes 3 gebildet sein.

An dem Biegestab 3 sind zwei von Dehnungsmeßstreifen 16 und 17 gebildete, elektrische Daten gebende Drehmomentmesser befestigt. Die Dehnungsmeßstreifen 16,17 sind dabei an der Seite des Biegestabes 3 vorgesehen, die sich beim bestimmungsgemäßen Gebrauch des Drehmomentschlüssels streckt oder staucht, je nach der Drehrichtung des Drehmomentschlüssels. Die beiden Dehnungsmeßstreifen 16, 17 sind dabei in Längsrichtung des Biegestabes 3 in Abstand zueinander angeordnet.

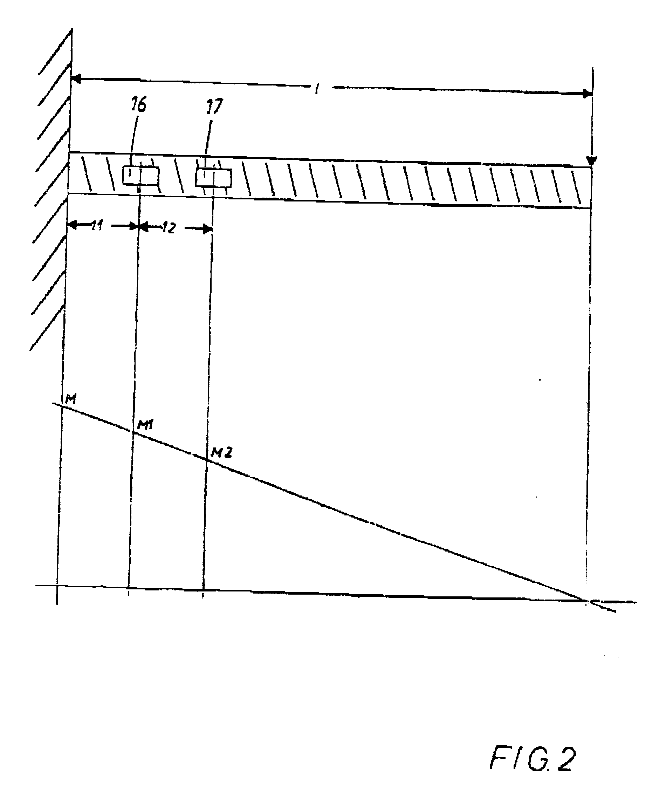

Aus der Fig. 2 ist ersichtlich, daß der Dehnungsmeßstreifen 16 mit dem Abstand L1 zur Längsmittellinie des Vierkantzapfens angeordnet ist, wobei die Längsmittellinie des Vierkantzapfens 2 den Drehpunkt des Drehmomentschlüssels darstellt. Der Dehnungsmeßstreifen 17 ist mit dem Abstand L2 zum Dehnungsmeßstreifen 16 angeordnet. Aus noch zu erläuternden Gründen werden zweckmäßigerweise die Abstände derart bemessen, daß L1 gleich L2 ist.

Die mit dem Dehnungsmeßstreifen 16 bzw. 17 gemessene Streckung bzw. Stauchung der äußeren Faser vom Biegestab 3 ist proportional der Biegung und die Biegung abhängig vom aufgebrachten Drehmoment, dem Elastizitätsmodul und dem Trägheitsmoment. Da beim Aufbringen einer Kraft auf den Handgriff eines Drehmomentschlüssels der Hebelarm, der Elastizitätsmodul und das Trägheitsmoment unverändert bleiben, kann somit anhand der Durchbiegung das erzielte Drehmoment gemessen werden. Bei der Benutzung eines einzigen Dehnungsmeßstreifens 16 entspricht das Drehmoment des Drehmomentschlüssels dem Produkt aus dem mit dem Dehnungsmeßstreifen 16 gemessenen Drehmoment M1 und L/(L-L1). L ist dabei die Gesamtlänge des Hebelarmes bis zum Angriffspunkt der Kraft und L1 der Abstand zwischen dem benutzten Dehnungsmeßstreifen und dem Drehpunkt des Drehmomentschlüssels. Da der Abstand zwischen dem Drehpunkt des Drehmomentschlüssels und der einwirkenden Kraft die Genauigkeit der Messung beeinflußt, ist es nötig, daß die Kraft an der selben Stelle des Handgriffes einwirkt, für die die Eichung vorgenommen wurde.

Diese geschilderten Nachteile lassen sich durch den Einsatz eines zweiten Dehnungsmeßstreifens 17 im Abstand L2 zum ersten Meßstreifen 16 vermeiden, wenn man den an dieser Stelle gemessenen Wert mit dem Meßwert des ersten Dehnungsmeßstreifens 16 verknüpft.

In der Fig. 2 ist der Drehmomentverlauf über einen einseitig eingespannten Balken (Biegestab) dargestellt. Die durch die beiden Dehnungsmeßstreifen 16 und 17 ermittelten Drehmomente sind mit M1 und M2 bezeichnet. Der Dehnungsmeßstreifen 16 ist im Abstand L1 von der Einspannstelle (Schraube, Mutter) angebracht, der Dehnungsmeßstreifen 17 im Abstand L1 + L2 zur Einspannstelle. Dann gilt für das Drehmoment an der Einspannstelle $M = M1 + (L1/L2)(M1 - M2)$. Für den speziellen Fall, bei dem L1 = L2 ist, gilt dann $M = 2 M1 - M2$. Damit läßt sich das Drehmoment an der Einspannstelle unabhängig vom Kraftangriffspunkt ermitteln.

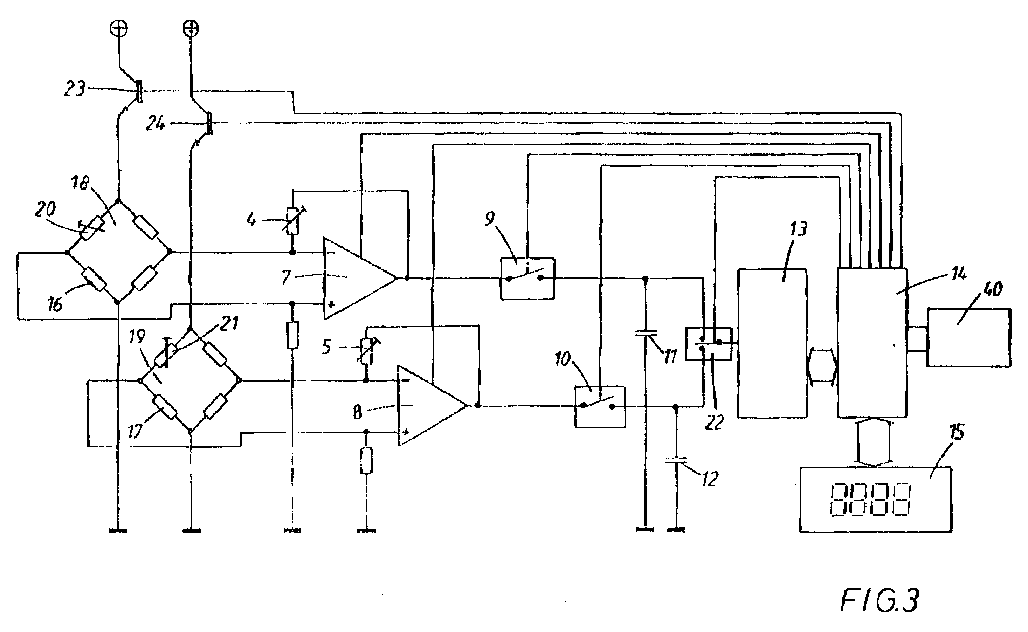

In der Fig. 3 ist das Schaltbild des Drehmomentschlüssels dargestellt. Der Dehnungsmeßstreifen 16 ist als Widerstand zusammen mit drei weiteren Widerständen in einer Meßbrücke 18 eingesetzt. Der Dehnungsmeßstreifen 17 ist als Widerstand zusammen mit drei weiteren Widerständen in einer zweiten Meßbrücke 19 eingesetzt. Die beiden Dehnungsmeßstreifen 16 und 17 sind somit, voneinander unabhängig, in je einer eigenen Meßbrücke 18 bzw. 19 angeordnet. Die Querspannung der Meßbrücke 18 führt zu einem Verstärker 7 und die Querspannung der Meßbrücke 19 zu einem Verstärker 8.

Die genaue Einstellung des Nullpunktes der Meßbrücken 18, 19 erfolgt in noch zu beschreibender Weise über einen Korrekturfaktor. Für die Grobeinstellung des Nullpunktes sind die Meßbrücken 18 und 19 mit je einem trimmbaren Widerstand 20, 21 versehen. Statt der trimmbaren Widerstände 20, 21 kann die Grobeinstellung des Nullpunktes auch über nicht näher dargestellte Potentiometer erfolgen.

Die genaue Einstellung der Verstärker 7 und 8 erfolgt ebenfalls in noch zu beschreibender Weise mit Korrekturfaktoren. Zusätzlich kann der Verstärker 7 dabei mit einem Potentiometer 4 und der Verstärker 8 mit einem Potentiometer 5 geregelt werden. Mit diesen Potentiometern 4 und 5 ist eine grobe Voreinstellung möglich, insbesondere dann, wenn das Widerstandsmoment und damit auch das Trägheitsmoment des Biegestabes 3 toleranzbedingt Abweichungen aufweist. Ebenso kann auch der Proportionalitätsfaktor K der Dehnungsmeßstreifen 16 und 17 toleranzbedingte Abweichungen aufweisen. Der Proportionalitätsfaktor K ist das Verhältnis zwischen relativer Längendehnung und Widerstandsänderung an jedem Dehnungsmeßstreifen 16, 17. Eine fehlerhafte Anbringung der Dehnungsmeßstreifen 16, 17 an den Biegestab 3, das heißt, eine Änderung der Abstände L1 und L2 kann durch die Potentiometer ebenfalls abgeglichen werden.

Die von der Meßbrücke 18 kommende Querspannung gelangt über den Verstärker 7 zu einem Schalter 9 und über den Schalter 9 zu einem Meßwertspeicher 11, der von einem Kondensator gebildet ist. Die von der Meßbrücke 19 kommende Querspannung gelangt über den Verstärker 8 zu dem Schalter 10 und über den Schalter 10 zu einem Meßwertspeicher 12, der ebenfalls von einem Kondensator gebildet ist. Über einen Schalter 22 können die in den Meßwertspeichern 11, 12 gespeicherten Meßwerte abwechselnd, nacheinander einem Analog-Digital-Wandler 13 (AD-Konverter) zugeführt werden. Der Analog-Digital-Wandler steht in Verbindung mit einem Mikroprozessor 14 und der Mikroprozessor 14 mit einem die Meßwerte digital angebenden Anzeigegerät 15. Der Mikroprozessor steuert dabei den Schalter 22 und die Schalter 9 und 10 und auch die Verstärker 7 und 8 und die Meßbrücken 18, 19. Der Mikroprozessor 14 steuert weiterhin zwei Transistoren 23, 24, mit denen den beiden Meßbrücken 18, 19 taktweise, jeweils für den Zeitraum von etwa 15 bis 200 Mikrosekunden mit Strom beaufschlagbar sind. Beim bestimmungsgemäßen Gebrauch des Drehmomentschlüssels werden die Messungen sehr kurzzeitig durchgeführt, so daß sehr wenig Strom verbraucht wird. Da die Meßzeiten verhältnismäßig sehr kurz sind, können etwa 20 Messungen pro Sekunde durchgeführt werden, ohne daß ein wesentlicher Stromverbrauch eintritt. Die Taktfolge der Messungen kann sich beim bestimmungsgemäßen Gebrauch durch die Anzeige des sich schnell ändernden Meßwertes vom Mikroprozessor 14 gesteuert erhöhen. Sobald beim Drehmomentschlüssel die Meßwerte sich nicht ändern, wird somit die Taktfolge wesentlich verlangsamt, so daß dann kaum ein Stromverbrauch eintritt.

Die Meßbrücken werden jeweils nur für Bruchteile des eigentlichen Meßzyklus durch die Transistoren 23 und 24 eingeschaltet und ihr Meßwert in den Meßwertspeichern 11 und 12 gespeichert. Dadurch wird auch während des eigentlichen Meßvorganges und nicht nur in Meßpausen der Stromverbrauch stark reduziert. Durch die Speicherung der gemessenen und in den Verstärkern 7 und 8 verstärkten Meßspannungen ist es möglich, die bei den Messungen gewonnenen Werte durch den AD-Wandler 13 und dem Mikroprozessor 14 nacheinander zu verarbeiten. Die Meßbrücken 18, 19 brauchen nicht während der gesamten Wandlungszeit des relativ langsamen AD-Wandlers 13 eingeschaltet bleiben. Als AD-Wandler 13 kann ein langsamer Wandler benutzt werden, der stromsparend arbeitet. Bei Meßpausen ist auch der AD-Wandler 13 vom Mikroprozessor 14 abschaltbar.

Gespeichert werden Meßspannungen dadurch, daß während der Einschaltzeit der Meßbrücken 18, 19 die Schalter 9 und 10 vom Mikroprozessor 14 durchgeschaltet sind und die Kondensatoren 11 und 12 aufgeladen werden. Vor dem Abschalten der Meßbrücken 18, 19 werden die Schalter 9 und 10 durch den Mikroprozessor wieder geöffnet. Während des Aufladens der Kondensatoren 11 und 12 ist der Schalter 22 offen. Nur in der Zeit des Abfragens der Meßwertspeicher ist der Schalter 22 in der einen oder der anderen Einschaltstellung und stellt somit eine kurzzeitige Verbindung mit dem AD-Wandler 13 her. Zum weiteren Stromsparen können auch die Verstärker 7 und 8 zwischen den Meßzyklen ausgeschaltet werden.

In vorteilhafter Weise können die beiden Meßbrücken 18, 19 bei einer Null-Drehmomentmessung eine solche Querspannung aufweisen, die etwa der Hälfte der vom AD-Wandler 13 zu verarbeitenden Maximal-Spannung entspricht. Bei einer Drehmomentmessung in der einen Drehrichtung erfassen die Spannungswerte dann den Bereich zwischen etwa 1/2 und etwa 1/1 und bei einer Drehmomentmessung in der anderen Drehrichtung die Spannungswerte zwischen etwa 1/2 und etwa Null. Auf diese Weise werden in einfacher Weise positive und negative Drehmomente, das heißt, Drehmomente in der einen und in der anderen Drehrichtung, aufgezeigt. Die vom AD-Wandler 13 zu verarbeitende Maximal-Spannung beträgt etwa 2,5 Volt. Bei der Messung eines Drehmomentes in der Größenordnung von Null erhält der AD-Wandler 13 von den Meßbrücken 18, 19 eine Querspannung von etwa 1,25 Volt.

Bei einer Null-Drehmomentmessung kann der Ist-Wert der Querspannung der Meßbrücken 18, 19 mit dem Soll-Wert vergleichbar sein und Abweichungen bei der eigentlichen Messung von positiven oder negativen Drehmomenten als Korrekturwert im Mikroprozessor Verwendung finden. Temperaturbedingte Längenänderungen der Dehnungsmeßstreifen 16, 17 werden somit in einfacher Weise automatisch ausgeglichen. Die Meßwerte von Meßreihen können im Mikroprozessor 14 miteinander verknüpft werden, so daß der Mittelwert und/oder der Höchstwert der Meßreihe auf Abfrage anzeigbar ist.

Weiterhin ist es auch möglich, das Erreichen eines einzustellenden, mit Plus- und Minustoleranzen versehenen Soll-Wertes des aufzubringenden Drehmomentes optisch und/oder akustisch anzuzeigen. Damit wird dem Benutzer optisch und/oder akustisch das Erreichen des eingestellten Toleranzfeldes angezeigt. Soweit die untere Grenze erreicht wird, leuchtet beispielsweise ein nicht näher dargestelltes grünes Lämpchen auf. Wird das Toleranzfeld überschritten, so kann ein ebenfalls nicht näher dargestelltes rotes Lämpchen aufleuchten. Während des Durchfahrens des Toleranzfeldes kann auch noch ein akustisches Signal gegeben werden. Vor dem bestimmungsgemäßen Gebrauch des Drehmomentschlüssels kann der Benutzer das Toleranzfeld zum Soll-Wert nach oben und unten unterschiedlich in Prozenten eingeben.

Bei einem Überschreiten des einzustellenden Höchstwertes des aufzubringenden Drehmomentes kann durch das erforderliche Rückdrehen dieser zu hoch liegende Meßwert aus der Meßwertverknüpfung zur Ermittlung des Höchstwertes und/oder Mittelwertes einer Meßreihe entfernt werden. Sobald der Benutzer mit dem Drehmomentschlüssel ein zu hohes Drehmoment auf die Schraube aufgebracht hat, muß er durch Rückdrehen die Schraube wieder lösen. Durch dieses Rückwärtsdrehen des Drehmomentschlüssels wird der zu hoch liegende Meßwert aus der Meßwertverknüpfung gelöscht, so daß er auf die Ermittlung des Mittelwertes einer Meßreihe keinen Einfluß hat. Natürlich ist es auch möglich, nur solche Ist-Werte im Mikroprozessor 14 miteinander zu verknüpfen, die im Toleranzfeld liegen. Alle anderen Werte, auch die in entgegengesetzter Drehrichtung liegenden Werte, werden nicht erfaßt.

Mit dem Mikroprozessor 14 kann die zu den Meßbrücken 18, 19 gehende Spannung verändert und damit der Meßbereich verändert werden. Eine Meßbereichsänderung kann auch dadurch erreicht werden, daß vom Mikroprozessor 14 gesteuert die Verstärkung der Querspannungen der Meßbrücken 18, 19 abgeändert wird. Mit dem Mikroprozessor 14 kann auch zugleich eine Umrechnung und Umschaltung auf unterschiedliche Maßeinheiten durchgeführt werden. Als Maßeinheiten können dabei Kilopondmeter und Newtonmeter Verwendung finden. Ebenfalls ist auch eine Umrechnung in das englische Maßsystem möglich.

Die zum Einstellen und/oder Eichen des Drehmomentschlüssels dienende Vorrichtung besteht aus einem Gehäuse 25, in dem ein mit dem Drehmomentschlüssel kuppelbarer Torsionsstab 26 angeordnet ist. Der Torsionsstab 26 ist dabei mit seinem einen Ende an der Gehäusewand 27 durch Schweißen befestigt, wärend das andere Ende 28 des Torsionsstabes 26 in einen Durchbruch 29 der Gehäusewand 30 drehbar gelagert ist. Das in der Gehäusewand 30 gelagerte Ende 28 des Torsionsstabes 26 weist dabei eine viereckige Aufnahme 31 für den Vierkantzapfen 2 des Drehmomentschlüssels auf. Nach einem Einstecken des Vierkantzapfens 2 des Drehmomentschlüssels in die Aufnahme 31 des Torsionsstabes 26 kann mit dem Drehmomentschlüssel ein Drehmoment auf den Torsionsstab 26 ausgeübt werden, der sich dadurch elastisch verdreht.

An dem Torsionsstab 26 ist ein von einem Dehnungsmeßstreifen 32 gebildeter, elektrische Daten gebender Drehmomentmesser angeordnet, um die Verdrehung des Torsionsstabes 26 zu messen. Die mit dem Dehnungsmeßstreifen 32 gemessene Streckung der äußeren Faser vom Torsionsstab 26 ist proportional der Verdrehung und die Verdrehung abhängig vom aufgebrachten Drehmoment, dem Elastizitätsmodul und dem Trägheitsmoment.

Der am Torsionsstab 26 vorgesehene Dehnungsmeßstreifen 32 ist zusammen mit drei weiteren Widerständen zu einer Wheatstone-Meßbrücke geschaltet, wobei der Widerstand 33 als trimmbarer Widerstand ausgebildet ist, um den Nullpunkt der Meßbrücke einstellen zu können.

Die von der Meßbrücke 34 kommende Querspannung gelangt über einen Verstärker 35 zu einem Analog-Digital-Wandler 36 (AD-Konverter). Der Analog-Digital-Wandler 36 steht in Verbindung mit einem Mikroprozessor 37 und der Mikroprozessor 37 mit einem die Meßwerte digital angebenden Anzeigegerät 38. Der Mikroprozessor 37 steuert den Verstärker 35, wobei der Verstärker 35 mit einem Potentiometer 39 einstellbar ist.

Beim bestimmungsgemäßen Gebrauch der Vorrichtung zum Einstellen und/oder Eichen des Drehmomentschlüssels ist die elektrische Daten gebende Meßeinrichtung des Drehmomentschlüssels mit einer am Schlüssel vorgesehene Steckkontakteinrichtung 40 (Schnittstelle, Interface) mit der ebenfalls elektrische Daten gebende Meßeinrichtung der Einstell- und/oder Eichvorrichtung verbindbar. Die elektrische Daten gebende Meßeinrichtung der Einstell- und/oder Eichvorrichtung weist dabei ebenfalls eine Steckkontakteinrichtung 41 auf. Beim bestimmungsgemäßen Gebrauch der Vorrichtung zum Einstellen und/oder Eichen des Drehmomentschlüssels können somit die elektrische Daten gebende Meßeinrichtungen vom Drehmomentschlüssel und von der Einstell- und/oder Eichvorrichtung einen Dialog miteinander führen, wobei die Meßeinrichtung der Einstell- und/oder Eichvorrichtung die Meßeinrichtung des Drehmomentschlüssels kontrolliert und erforderlichenfalls mit Faktoren zur Umstellung, Einstellung, Korrektur od. dgl. versieht.

Beim bestimmungsgemäßen Gebrauch kann die elektrische Daten gebende Meßeinrichtung der Einstell- und/oder Eichvorrichtung erforderlichenfalls analoge Korrekturfaktoren in den Analog-Digital-Wandler 13 der Meßeinrichtung des Drehmomentschlüssels eingeben. Ebenso ist es auch möglich, daß beim Einstell- und/oder Eichvorgang erforderlichenfalls digitale Korrekturfaktoren von der Einstell- und/oder Eichvorrichtung in die Meßeinrichtung des Drehmomentschlüssels eingegeben werden. Bei der gegebenenfalls erfolgenden Ermittlung unterschiedlich großer Korrekturfaktoren bei der Einstellung und/oder Eichung unterschiedlich großer Drehmomente können die Korrekturfaktoren in Form einer Tabelle in einem Speicher, wie zum Beispiel einem gepufferten RAM-Speicher (Random-Access-Memory) einem EEprom od. dgl. ablegbar sein. Diese in Form einer Tabelle abgelegten Korrekturfaktoren können dann beim Meßvorgang im Programm des Drehmomentschlüssels abgerufen werden. Dadurch ist in einfacher Weise eine Umstellung, Einstellung und Eichung des Drehmomentschlüssels auch für ungeübte Benutzer möglich, da der Drehmomentschlüssel lediglich mit der Vorrichtung zum Einstellen und/oder Eichen einzusetzen und auch die Meßeinrichtungen miteinander zu verbinden sind. Beim Aufbringen eines Drehmomentes mit dem Drehmomentschlüssel zeigen dann die Anzeigegeräte 15 und 38 vom Drehmomentschlüssel und von der Eichvorrichtung die Größe des aufgebrachten Drehmomentes an und der Drehmomentschlüssel wird automatisch geeicht, so daß dann die beiden Anzeigegeräte 15 und 38 jeweils den gleichen Wert anzeigen. Falls die Einstell- und/oder Eichvorrichtung als Maßeinheit Newtonmeter anzeigt, dann werden nach dem Einstellen am Drehmomentschlüssel ebenfalls Newtonmeter angegeben. Falls die Einstell- und/oder Eichvorrichtung als Maßeinheit Kilopondmeter angibt, dann gibt der Drehmomentschlüssel nach dem Einstellen ebenfalls die gleiche Maßeinheit an. In gleicher Weise ist auch eine Umstellung auf das englische Maßsystem möglich.

Mit der Vorrichtung zum Einstellen und/oder Eichen des Drehmomentschlüssels können auch für spezielle Verwendungszwecke dienende weitere Angaben über die Zahl und Art der mit dem Drehmomentschlüssel auf die Schraube bewirkten Anzüge in die elektrisch betriebene Meßeinrichtung des Drehmomentschlüssels eingegeben werden, so daß dies dem Benutzer bei jeder Benutzung des Drehmomentschlüssels angezeigt wird.

Beim Eichen des Drehmomentschlüssels wird nicht der im Anzeigegerät 15 des Drehmomentschlüssels angezeigte, sondern der jeweils gemessene Wert jeder einzelnen Brücke 18, 19 dem Eichgerät mitgeteilt, und vom Eichgerät kommen dann Korrekturfaktoren für jede Brücke 18, 19, so daß die Potentiometer 4 und 5 zur Verstärkungseinstellung der Verstärker 7 und 8 lediglich der Grobeichung dienen und die Korrekturfaktoren die genaue Eichung bewirken.

Beim Beginn der Einstellung und/oder Eichung kann auch der Nullpunkt der Meßbrücken 18, 19 des Drehmomentschlüssels mit von der elektrisch betriebenen Meßeinrichtung der Einstell- und/oder Eichvorrichtung kommenden Korrekturfaktoren eingestellt werden. Die in den Meßbrücken 18, 19 vorgesehenen trimmbaren Widerstände 20, 21 dienen somit ebenfalls nur der Grobeinstellung, während die Feineinstellung mit Korrekturfaktoren erfolgt.

Die in Form einer Tabelle in einem Speicher der Meßeinrichtung des Drehmomentschlüssels ablegbaren Korrekturfaktoren können zusätzlich in einem weiteren, vom Drehmomentschlüssel abnehmbaren und bedarfsweise mit der Meßeinrichtung des Drehmomentschlüssels wieder verbindbaren Speicher abgelegt werden. Die elektrisch betriebene Meßeinrichtung des Drehmomentschlüssels weist eine Batterie auf. Bei einem Spannungsabfall bzw. einem vollständigen vollständigen Ausfall der Batterie können die Korrekturfaktoren verlorengehen. Nach dem Einsetzen einer neuen Batterie ist dann keine erneute Eichung bzw. Einstellung des Drehmomentschlüssels erforderlich, da mit dem zusätzlichen Speicher die Faktoren zur Einstellung, Umstellung und Eichung wieder in die elektrisch betriebene Meßeinrichtung des Drehmomentschlüssels eingebbar sind.

Bezugszeichenliste:

| 1 | Handgriff |
|---|---|
| 2 | Vierkantzapfen |
| 3 | Biegestab |
| 4 | Potentiometer |
| 5 | Potentiometer |
| 7 | Verstärker |
| 8 | Verstärker |
| 9 | Schalter |
| 10 | Schalter |
| 11 | Meßwertspeicher |
| 12 | Meßwertspeicher |
| 13 | Analog-Digital-Wandler |
| 14 | Mikroprozessor |
| 15 | Anzeigegerät |
| 16 | Dehnungsmeßstreifen |
| 17 | Dehnungsmeßstreifen |
| 18 | Meßbrücke |
| 19 | Meßbrücke |
| 20 | trimmbarer Widerstand |
| 21 | trimmbarer Widerstand |
| 22 | Schalter |
| 23 | Transistor |
| 24 | Transistor |
| 25 | Gehäuse |
| 26 | Torsionsstab |

| 27 | Gehäusewand |
|----|----|
| 28 | Ende von 26 |
| 29 | Durchbruch |
| 30 | Gehäusewand |
| 31 | Aufnahme |
| 32 | Dehnungsmeßstreifen |
| 33 | Widerstand |
| 34 | Meßbrücke |
| 35 | Verstärker |
| 36 | Analog-Digital-Wandler |
| 37 | Mikroprozessor |
| 38 | Anzeigegerät |
| 39 | Potentiometer |
| 40 | Steckkontakteinrichtung |
| 41 | Steckkontakteinrichtung |

**Patentansprüche**

1. Drehmomentschlüssel zum Aufbringen und/oder Messen einer vorbestimmten Vorspannung auf die Schäfte von in Werkstücken eingezogenen Schrauben, insbesondere Dehnschrauben und Vorrichtung zum Einstellen und/oder Eichen des Drehmomentschlüssels, der aus einem Hebelarm besteht, an dessen einem Hebelende eine Angriffsstelle (2) für den Schraubenkopf bzw. die Schraubenmutter angeordnet und dessen anderes Hebelende als Handhabe (1) ausgebildet ist und einen elektrische Daten gebenden Drehmomentmesser wie zum Beispiel mindestens einen Dehnungsmeßstreifen (16,17) aufweist, der an einem beim bestimmungsgemäßen Gebrauch sich elastisch biegenden Bereich (3) des Hebelarms in Längsrichtung angeordnet und in einer Wheatstone-Meßbrücke geschaltet ist und die Querspannung der Meßbrücke verstärkt einem Meßwertspeicher und über einem Analog-Digital-Wandler einem Mikroprozessor zuführbar ist und der Mikroprozessor ein digital angebendes Anzeigerät steuert,
**dadurch gekennzeichnet**,
daß die zum Einstellen und/oder Eichen des Drehmomentschlüssels dienende Vorrichtung einen mit dem Drehmomentschlüssel kuppelbaren Bauteil (26) aufweist, der mit dem Drehmoment des Drehmomentschlüssels belastbar ist und sich dabei entsprechend den vom Drehmomentschlüssel aufgebrachten Drehmoment elastisch verformt und einen elektrische Daten gebenden Drehmomentmesser, wie zum Beispiel mindestens einen in einer Wheatstone-Meßbrücke (34) geschalteten Dehnungsmeßstreifen (32) aufweist und die Querspannung der Meßbrücke (34) verstärkt über einem Analog-Digital-Wandler (36) einem Mikroprozessor (37) und einem Anzeigegerät (38) zuführbar ist, wobei die beiden elektrische Daten gebenden Meßeinrichtungen vom Drehmomentschlüssel und von der Einstell- und/oder Eichvorrichtung derart miteinander verbunden sind, daß die Meßeinrichtung der Einstell- und/oder Eichvorrichtung die Meßeinrichtung des Drehmomentschlüssels kontrolliert und erforderlichenfalls mit Faktoren zur Umstellung, Einstellung, Korrektur od. dgl. versieht.

2. Drehmomentschlüssel nach Anspruch 1, dadurch gekennzeichnet, daß der mit dem Drehmomentschlüssel kuppelbare Bauteil (26) der zum Einstellen und/oder Eichen des Drehmomentschlüssels dienenden Vorrichtung von einem Torsionsstab (26) gebildet ist, der den von einem Dehnungsmeßstreifen (32) gebildeten, elektrische Daten gebenden Drehmomentmesser aufweist und sich entsprechend dem vom Drehmomentschlüssel aufgebrachten Drehmoment elastisch verdreht.

3. Drehmomentschlüssel nach Anspruch 1 oder 2, dadurch gekennzeichnet, daß die elektrisch betriebene Meßeinrichtung des Drehmomentschlüssels mit einer am Schlüssel vorgesehenen Steckkontakteinrichtung (40) (Schnittstelle, Interface) mit der ebenfalls elektrisch betriebenen Meßeinrichtung der Einstell- und/oder Eichvorrichtung zu dessen bestimmungsgemäßen Anwendung verbindbar ist.

4. Drehmomentschlüssel nach einem der Ansprüche 1 bis 3, dadurch gekennzeichnet, daß beim Einstell- und/oder Eichvorgang erforderlichenfalls analoge Korrekturfaktoren von der Einstell- und/oder Eichvorrichtung in den Analog-Digital-Wandler (13) der Meßeinrichtung des Drehmomentschlüssels eingebbar sind.

5. Drehmomentschlüssel nach einem der Ansprüche 1 bis 3, dadurch gekennzeichnet, daß beim Einstell- und/oder Eichvorgang erforderlichenfalls analoge Korrekturfaktoren von der Einstell- und/oder Eichvorrichtung in die Meßeinrichtung des Drehmomentschlüssels eingebbar sind.

6. Drehmomentschlüssel nach einem der Ansprüche 1 bis 5, dadurch gekennzeichnet, daß bei der gegebenenfalls erfolgenden Ermittlung unterschiedlich großer Korrekturfaktoren bei der Einstellung und/oder Eichung unterschiedlicher großer Drehmomente die Korrekturfaktoren in Form einer Tabelle in einem Speicher, wie zum Beispiel einen gepufferten RAM-Speicher (Random-Access-Memory) einem EEprom od.

dgl. ablegbar und beim Meßvorgang im Programm des Drehmomentschlüssels abrufbar sind.

7. Drehmomentschlüssel nach einem der Ansprüche 1 bis 6, dadurch gekennzeichnet, daß die in Form einer Tabelle in einem Speicher der Meßeinrichtung des Drehmomentschlüssels ablegbaren Korrekturfaktoren zusätzlich in einem weiteren vom Drehmomentschlüssel abnehmbaren und bedarfsweise mit der Meßeinrichtung des Drehmomentschlüssels wieder verbindbaren Speicher ablegbar sind.

8. Drehmomentschlüssel nach einem der Ansprüche 1 bis 7, dadurch gekennzeichnet, daß bei einer Anordnung von zwei oder mehr Dehnungsmeßstreifen (16, 17) am sich elastisch biegenden Bereich (3) des Hebelarms vom Drehmomentschlüssel jeder Dehnungsmeßstreifen (16, 17) voneinander unabhängig, jeder für sich, in einer Wheatstone-Meßbrücke (18, 19) geschaltet und die Querspannungen der Meßbrücken (18, 19) je für sich verstärkt und über einem Schalter (9, 10) je einem Meßwertspeicher (11, 12) und von dort taktweise, abwechselnd über einem Analog-Digital-Wandler (13) dem Mikroprozessor (14) mit Anzeigegerät (15) zuführbar sind, die von den Wheatstone-Brückenschaltungen (18, 19) ermittelten Werte beim Einstell- und/oder Eichvorgang je für sich von der Einstell- und/oder Eichvorrichtung kontrollierbar und je für sich erforderlichenfalls mit den entsprechenden Korrekturfaktoren versehbar sind.

9. Drehmomentschlüssel nach einem der Ansprüche 1 bis 8, dadurch gekennzeichnet, daß beim Beginn der Einstellung und/oder Eichung auch der Nullpunkt der Meßbrücken (18, 19) des Drehmomentschlüssels mit von der elektrisch betriebenen Meßeinrichtung der Einstell- und/oder Eichvorrichtung kommenden Korrekturfaktoren einstellbar ist.

**Claims**

1. A torque wrench for applying and/or measuring a predetermined prestressing on the shanks of screws which are inserted in workpieces, in particular necked-down screws, and device for adjusting and/or calibrating the torque wrench which comprises a lever arm, at one lever end of which is arranged an engagement means (2) for the screw head or the screw nut and the other lever end of which is in the form of a handle (1) and has an electrical data supplying torque measuring means such as for example at least one strain gauge (16, 17) which is arranged in the longitudinal direction at a region (3) of the lever arm that elastically bends when used as specified, and which is connected in a Wheatstone measuring bridge and the transverse voltage of the measuring bridge can be supplied in amplified form to a measurement value storage means and by way of an analog-digital converter to a microprocessor and the microprocessor controls a digital-readout display device, characterised in that the device which serves for adjusting and/or calibrating the torque wrench has a component (26) which can be coupled to the torque wrench and can be loaded with the torque of the torque wrench and in that situation is elastically deformed in accordance with the torque applied by the torque wrench and has an electrical data supplying torque measuring means such as for example at least one strain gauge (32) connected in a Wheatstone measuring bridge (34) and the transverse voltage of the measuring bridge (34) can be fed in amplified form by way of an analog-digital converter (36) to a microprocessor (37) and a display device (38), wherein the two electrical data supplying measuring devices are connected together by the torque wrench and the adjusting and/or calibrating device in such a way that the measuring device of the adjusting and/or calibrating device monitors the measuring device of the torque wrench and if necessary provides it with factors for resetting, adjusting, correcting or the like.

2. A torque wrench according to claim 1 characterised in that the component (26), which can be coupled to the torque wrench, of the device which serves for adjusting and/or calibrating the torque wrench is formed by a torsion bar (26) which has the electrical data-supplying torque measuring means formed by a strain gauge (32) and which is elastically twisted in accordance with the torque applied by the torque wrench.

3. A torque wrench according to claim 1 or claim 2 characterised in that the electrically operated measuring device of the torque wrench can be connected with a plug contact means (40) (interface) provided on the wrench to the also electrically operated measuring device of the adjusting and/or calibrating device for use thereof as specified.

4. A torque wrench according to one of claims 1 to 3 characterised in that in the adjusting and/or calibrating operation analog correction values can be inputted as required by the adjusting and/or calibrating device into the analog-digital converter (13) of the measuring device of the torque wrench.

5. A torque wrench according to one of claims 1 to 3 characterised in that in the adjusting and/or calibrating operation analog correction factors can be inputted as required by the adjusting and/or calibrating device into the measuring device of the torque wrench.

6. A torque wrench according to one of claims 1 to 5 characterised in that, in the operation which is possibly effected for determining correction factors of different magnitudes, in the adjustment and/or calibration of torques of different magnitudes, the correction factors are stored in the form of a table in a storage means such as for example a buffered random access memory, an EEprom or the like, and can be called up in the measurement operation in the program of the torque wrench.

7. A torque wrench according to one of claims 1 to 6 characterised in that the correction factors which can be stored in the form of a table in a storage means of the measuring device of the torque wrench can additionally be stored in a further storage means which is removable from the torque wrench and which if necessary can be connected again to the measuring device of the torque wrench.

8. A torque wrench according to one of claims 1 to 7 characterised in that, with an arrangement of two or more strain gauges (16, 17) on the elastically bending region (3) of the lever arm of the torque wrench each strain gauge (16, 17) is connected independently of each other and each for itself in a Wheatstone measuring bridge (18, 19) and the transverse voltages of the measuring bridges (18, 19) can be respectively passed in itself in amplified form and by way of a switch (9, 10) to a respective measurement value storage means (11, 12) and from there cyclically alternately by way of an analog-digital converter (13) to the microprocessor (14) with display device (15), and the values ascertained by the Wheatstone bridge circuits (18, 19) can each be monitored in itself in the adjusting and/or calibrating operation by the adjusting and/or calibrating device and can each be provided for itself as necessary with the corresponding correction factors.

9. A torque wrench according to one of claims 1 to 8 characterised in that at the beginning of the adjusting and/or calibrating operation the zero point of the measuring bridges (18, 19) of the torque wrench is adjustable with correction factors coming from the electrically operated measuring device of the adjusting and/or calibrating device.

**Revendications**

1. Clé dynamométrique d'application et/ou de mesure d'un couple de préserrage prédéterminé sur les tiges de vis vissées dans des pièces, en particulier les vis à tige allégée, et dispositif de réglage et/ou de tarage de la clé dynamométrique comprenant un bras de levier à une extrémité duquel est disposé un point d'attaque (2) de la tête de vis et de l'écrou de cette vis et dont l'autre extrémité est en forme de manette (1) et présente un torsiomètre transmettant des signaux de données électriques, tel par exemple au moins une jauge extensométrique (16,17) située dans le sens longitudinal d'une zone (3) du bras de levier qui (3) s'infléchit élastiquement lors d'un usage de la clé conforme à sa destination et qui (16, 17) est connectée à un pont métrologique de Wheatstone et la composante transversale de la tension étant communicable amplifiée à une mémoire de valeur de mesure et à un microprocesseur, via un convertisseur analogique-numérique et le microprocesseur pilotant un appareil d'affichage numérique,
**caractérisée en ce que**
le dispositif servant à régler et/ou calibrer la clé dynamométrique présente un module (26) couplable à la clé dynamométrique sur lequel (26) peut s'exercer le couple de la clé dynamométrique et qui ce faisant se déforme en conséquence élastiquement et présente un torsiomètre émettant des signaux de données électriques, comme par exemple au moins une jauge extensométrique (32) connectée à un pont de Wheatstone (34) et la composante transversale de la tension du pont de mesure (34) étant communicable amplifiée à un microprocesseur (37) via un convertisseur analogique/numérique (36) et à un appareil d'affichage (38), les deux dispositifs métrologiques de la clé dynamométrique et du dispositif de réglage et/ou de tarage, émetteurs de signaux de données électriques étant reliés l'un à l'autre de telle sorte que le dispositif métrologique du dispositif de réglage et/ou de tarage contrôle le dispositif métrologique de la clé dynamométrique et si nécessaire lui apporte des facteurs de conversion, réglage, correction ou assimilés.

2. Clé dynamométrique selon revendication 1, **caractérisée en ce que** le module (26), couplable avec la clé dynamométrique, du dispositif servant à régler et/ou tarer la clé dynamométrique, est formé d'une barre de torsion (26) présentant le torsiomètre émetteur de signaux de données électriques et formé d'une jauge extensométrique (32) et se tord élastiquement suivant le couple appliqué à la clé dynamométrique.

3. Clé dynamométrique selon revendication 1 ou 2, **caractérisée en ce que** le dispositif métrologique de la clé dynamométrique, fonctionnant à l'électricité, est reliable via un dispositif à contacts d'enfichage (40) (interface) prévu contre la clé, au dispositif métrologique fonctionnant également à l'électricité du dispositif de réglage et/ou de tarage en vue d'une utilisation conforme à sa destination.

4. Clé dynamométrique selon l'une des revendications 1 à 3, **caractérisée en ce que** lors de l'opération de réglage et/ou de tarage, des facteurs correctifs analogiques éventuellement nécessaires sont programmables depuis le dispositif de réglage et/ou tarage vers le convertisseur analogique-numérique (13) du dispositif métrologique de la clé dynamométrique.

5. Clé dynamométrique selon l'une dès revendications 1 à 3, **caractérisée en ce que** lors de l'opération de réglage et/ou de tarage, des facteurs correctifs analogiques éventuellement nécessaires sont programmables depuis le dispositif de réglage et/ou tarage vers le dispositif métrologique de la clé dynamométrique.

6. Clé dynamométrique selon l'une des revendications 1 à 5, **caractérisée en ce que** lors de la détermination éventuelle de facteurs correctifs de valeur différente lors du réglage et/ou du tarage de couples de valeurs différentes, lesdits facteurs correctifs sont mémorisables sous forme de tableau dans une mémoire telle que par exemple une mémoire RAM (Random-Access-Memory, mémoire vive) à batterie-tampon, une EEPROM ou assimilée, et sont rappelables dans le programme de la clé dynamométrique lors de l'opération de mesure.

7. Clé dynamométrique selon l'une des revendications 1 à 6, **caractérisée en ce que** les facteurs correctifs mémorisables sous forme de tableau dans une mémoire du dispositif métrologique de la clé dynamométrique sont en outre mémorisables dans une autre mémoire amovible de la clé dynamométrique et, si nécessaire, reliable de nouveau au dispositif métrologique de la clé dynamométrique.

8. Clé dynamométrique selon l'une des revendications 1 à 7, **caractérisée en ce que** lorsque sont disposées deux ou plusieurs jauges extensiométriques (16, 17) contre la zone (3) s'infléchissant élastiquement du bras de levier de la clé, chaque jauge extensométrique (16, 17) est connectée indépendamment l'une de l'autre à un pont de Wheatstone (18, 19), les composantes transversales de tension des ponts de mesure (18, 19) sont amplifiées chacune indépendamment et communicables chacune, via un commutateur (9, 10), à une mémoire de mesure chaque (11, 12) et de là en cadence, alternativement via un convertisseur analogique-numérique (13), au microprocesseur (14) avec appareil d'affichage (15), les valeurs déterminées par les ponts de Wheatstone (18, 19) pendant l'opération de réglage et/ou de tarage étant contrôlables chacune par le dispositif de réglage et/ou tarage et dotables chacune, si nécessaire, des facteurs correctifs correspondants.

9. Clé dynamométrique selon l'un des revendications 1 à 8, **caractérisée en ce qu'**au commencement du réglage et/ou du tarage le point zéro des ponts de mesure (18, 19) de la clé dynamométrique est lui aussi réglable à l'aide des facteurs correctifs provenant du dispositif électrique de mesure du dispositif de réglage et/ou de tarage.

FIG.1

FIG. 2

FIG.3

EP 0 372 247 B1

FIG. 4

FIG. 5